# EUROPÄISCHE PATENTANMELDUNG

(11) **EP 3 248 939 A1**
(43) Veröffentlichungstag der Anmeldung: **29.11.2017**
(21) Anmeldenummer: 16171252.6
(22) Anmeldetag: 25.05.2016
(51) Int. Cl.: C01B 33/029

(54) **ORGANOFUNKTIONELLE SILIZIUMPARTIKEL, VERFAHREN ZU DEREN HERSTELLUNG SOWIE DEREN VERWENDUNG**

(71) Anmelder: Evonik Degussa GmbH, 45128 Essen (DE)
(72) Erfinder: LANG, Jürgen Erwin, 76229 Karlsruhe (DE); FRINGS, Bodo, 33758 Schloss Holte Stukenbruck (DE); KRÖLL, Michael, 63589 Linsengericht (DE); UEHLENBRUCK, Goswin, 61440 Oberursel (DE)

(57) **Zusammenfassung**

Die Erfindung betrifft organofunktionelle Siliziumpartikel, die auf ihrer Oberfläche mit mindestens einer organischen Verbindung kovalent funktionalisiert sind. So können die Siliziumpartikel beispielsweise auf ihrer Oberfläche mit einer Vielzahl an -O-(C₁-C₄₈)-Alkyl Verbindungen funktionalisiert sein. Auf Grund der Funktionalisierung der Oberfläche der Siliziumpartikel können die Eigenschaften von Fluiden durch Zugabe der modifizierten Siliziumpartikel in ihrem Eigenschaftsprofil eingestellt werden. So können die mit Alkoxygruppen funktionalisierten Siliziumpartikel vorzugsweise als Additive einem Motoröl zur Verminderung der Viskosität zugesetzt werden.

## Beschreibung

Die Erfindung betrifft organofunktionelle Siliziumpartikel, die auf ihrer Oberfläche mit mindestens einer organischen Verbindung kovalent funktionalisiert sind. So können die organofunktionellen Siliziumpartikel beispielsweise auf ihrer Oberfläche mit einer Vielzahl an -O-(C₁-C₄₈)-Alkyl Verbindungen funktionalisiert sein. Auf Grund der Funktionalisierung der Oberfläche der Siliziumpartikel können die Eigenschaften von Fluiden durch Zugabe der organofunktionell modifizierten Siliziumpartikel in ihrem Eigenschaftsprofil eingestellt werden. So können die mit Alkoxygruppen funktionalisierten Siliziumpartikel vorzugsweise als Additive einem Motoröl zur Verminderung der Viskosität zugesetzt werden.

Die Viskosität eines Schmieröls zählt zu den wichtigsten Eigenschaften bei der Auswahl eines geeigneten Schmierstoffs. Soll z.B. ein Gleitlager im Bereich der Flüssigkeitsreibung laufen, um einen nahezu verschleißfreien Betrieb zu ermöglichen, kann mit der Wahl der richtigen Viskosität die Dicke des Schmierfilms eingestellt werden. Diese wird so gewählt, dass keine Gefahr besteht, dass das Lager bei kleinen äußeren Änderungen im Bereich der Mischreibung läuft, was zu einem vorzeitigen Bauteilausfall führen könnte. Gleichzeitig sollte der Schmierfilm aber auch nicht zu dick gewählt werden. In diesem Fall wäre zwar ein sicherer Betrieb möglich, aber der Reibungskoeffizient höher als nötig.

In der Schmierungstechnik hat sich zur Beschreibung der Temperatur-Viskositätsabhängigkeit der Viskositätsindex (VI) durchgesetzt, der 1928 in den USA eingeführt wurde. Als Grundlage dienten das damals temperaturabhängigste Grundöl, das den Wert VI = 0 bekam, und das am wenigsten temperaturabhängige Öl mit dem Wert VI = 100.

Die Druckabhängigkeit der Viskosität lässt sich mit der Gleichung (n(p) = n⁰ * exp (a*p)) von Barus abschätzen. Dabei beschreibt n⁰ die Viskosität bei 1 bar, a ist ein Viskositätsdruckkoeffizient und p der Druck. In der Metallumformung können Schmierstoffe so hoch belastet sein, dass die Viskosität um einige Zehnerpotenzen zunimmt.

Ferner besteht ein Bedarf an weiteren UV-Filtern mit sehr guten UV-Schutzeigenschaften, die auf anorganischen Materialien basieren und sich gleichzeitig gut in meist organischen Matrices einer Formulierung einbringen lassen sollen.

Es bestand daher die Aufgabe, ein Additiv bereitzustellen, das einerseits die Viskosität von Schmierstoffen herabsetzen kann und zugleich eine hohe Temperaturstabilität aufweist. Insbesondere bestand die Aufgabe ein Additiv bereitzustellen, das selbst bei höheren Temperaturen nicht verdampft und/oder sich nicht zersetzt. Vorzugsweise soll das Additiv bis etwa 300 °C temperaturstabil sein und nicht verdampfen. Ebenso bestand eine Aufgabe darin, ein Additiv oder einen Schmierstoff bereitzustellen, der die Eigenschaften von zwei verschiedenen Schmierölen in sich vereint - erfindungsgemäß eine niedrige Viskosität ohne bei höherer Temperatur bspw. zu verdampfen. Darüber hinaus soll das Additiv auch in sehr geringer Menge die Eigenschaften der jeweiligen Matrix entsprechend verändern. Des Weiteren bestand eine unabhängige Aufgabe darin, ein Additiv bereitzustellen, das in UV-Schutzformulierungen einsetzbar und sich in diesen homogen verteilen lässt.

Der erfindungsgemäße Ansatz besteht darin, dass beispielsweise ein Monosilan-Massestrom dahingehend behandelt wird, dass das Zwischenprodukt, insbesondere die *insitu* im Verfahren erhältlichen Siliziumpartikel, einer absorptiven Aufreinigung und/oder Umsetzung zugeführt werden. Der Massenstrom, der vorzugsweise 1,6 Vol.-% SiH₄ in einer Argonmatrix enthält und in einer Plasmaentladung im nicht-thermischen Gleichgewicht prozessiert und zur Reaktion gebracht wurde, umfasst Siliziumpartikel mit hochreaktiver Oberfläche. Hinsichtlich der Wirkung der Plasmabehandlung wird von einer Begünstigung der Kinetik dahingehend ausgegangen, dass plasmachemisch Siliziumionen gebildet werden, die selektiv Wasserstoff an den entsprechenden Siliziumverbindungen substituieren, woraus erfindungsgemäß ein Silizium-Nanopartikel radikal resultiert. Die Radikale machen den Massestrom einer reaktiven absorptiven Aufarbeitung zugänglich, insbesondere wird durch die absorptive Aufarbeitung die Oberfläche der Siliziumpartikel durch Chemiesorption von flüssigen organischen Verbindungen, insbesondere durch Chemiesorption, mit mindestens einer organischen Verbindung funktionalisiert.

In einer weiteren, bevorzugten Variante der Plasmaerzeugung wird der Volumenstrom einer sogenannten "Stillen Entladung bei Normalbedingungen" zugeführt und dort in einem nicht-thermischen Plasma zur Reaktion gebracht. Dem Fachmann ist bekannt, dass Stille Entladungen industriell in sogenannten Ozonisatoren genutzt werden. Der Plasmareaktor wird bevorzugt in Vollumsatz betrieben. Als ein Verfahren gilt als im Vollumsatz betrieben, wenn das Edukt zu mehr als 95 Vol.-% umgestzt wird. Aus dem Prozess wird der freiwerdende Wasserstoff bevorzugt als Reinprodukt abgezogen. Daneben werden ferner in einem weiteren Schritt die Siliziumpartikel von der Argonmatrix durch reaktive Chemiesorption abgetrennt. Im Restgas kann das Argon zurückgewonnen werden.

Für die bekannten Prinzipien der Gasentladung und der Plasma-Chemie wird auf die einschlägige Fachliteratur verwiesen: beispielsweise von A.T. Bell "Fundamentals of Plasma Chemistry" ed. J.R. Hollahan und A.T. Bell, Wiley, New York (1974).

Der Massestrom ist nach der Chemiesorption im erfindungsgemäßen Verfahren einer einfachen Aufarbeitung, wie Filtration, zugänglich, wodurch das Reinprodukt bevorzugt abgezogen werden kann. Anfallendes Restgas, das neben Argon und H₂, ggf. Monosilan enthält, kann einer Separation unterzogen werden und dabei gewonnenes Monosilan kann zurückgeführt werden.

Gegenstand der Erfindung sind organofunktionelle Siliziumpartikel, die auf ihrer Oberfläche mit mindestens einer organischen Verbindung kovalent funktionalisiert sind. Diese organofunktionellen Siliziumpartikel können als Primärpartikel und/oder als Agglomerate und/oder als Aggregate vorliegen. Ferner kann die Primärpartikelgröße der funktionalisierten Siliziumpartikel im Bereich von 1 nm bis 5000 nm betragen, insbesondere beträgt die Primärpartikelgröße der Siliziumpartikel von 10 nm bis 2000 nm. Zudem kann die Primärpartikelgröße der reinen Siliziumpartikel ohne Betrachtung der organischen Verbindungen, die die äußere Hülle der Siliziumpartikel bilden, von 1 nm bis 5000 nm betragen, vorzugsweise liegen die Primärpartikelgrößen bei 10 nm bis 250 nm. Des Weiteren betragen die bevorzugten Primärpartikelgrößen der funktionalisierten Siliziumpartikel bevorzugt im Bereich einer mittleren Primärpartikelgröße von im Mittel d₅₀ = 1 nm bis 200 nm, insbesondere von d₅₀ = 1 bis 100 nm, bevorzugt von d₅₀ = 1 bis 10 nm, d₅₀ = 5 bis 10 nm und/oder von d₅₀ = 16 bis 40 nm oder Gemische dieser Primärpartikelgrößen. Die Siliciumpartikel enthalten - ohne Berücksichtigung der Funktionalisierung - zu 95,0 bis 99,99 Gew.-% Silicium.

Nach einer besonders bevorzugten Alternative weisen die auf ihrer Oberfläche mit einer organischen Verbindung organofunktionellen Siliziumpartikel mindestens eine organische Verbindung mit einem Molekulargewicht von kleiner gleich 800 g/mol, vorzugsweise von 30 bis 800 g/mol, insbesondere 600 g/mol auf, vorzugsweise beträgt das Molekular-gewicht kleiner gleich 450 g/mol, weiter bevorzugt kleiner gleich 250 g/mol, kleiner gleich 150 g/mol, kleiner gleich 100 g/mol. Als organische Verbindungen gelten Polymere und Monomere, wobei Monomere als organische Verbindung bevorzugt sind. Als Polymere gelten erfindungsgemäß keine Zersetzungsprodukte, sondern nur Polymere, die unzersetzt durch Polymerisation aus Monomeren Verbindungen wie (Meth)acrylaten erhältlich sind. Bevorzugte organische Ausgangsverbindungen synonym zur flüssigen organischen Verbindung, die zur Funktionalisierung der Siliziumpartikel verwendet werden und die organische Verbindung bilden, umfassen vorzugsweise organische Lösemittel, protische organische Verbindungen, wie protische Lösemittel, Aminosäuren, Carbon-säuren, Fettsäuren, Fruchtsäuren etc.. Die protischen organischen Ausgangsverbindungen können als reine flüssige Ausgangsverbindung oder als Schmelze der Ausgangsverbindung vorliegen oder auch in einer inerten Matrix vorliegen.

Besonders bevorzugte funktionalisierte Siliziumpartikel sind erhältlich, indem die *insitu* in einem plasmachemischen Verfahren, insbesondere im nicht-thermischen Plasma, und/oder unter thermischen Bedingungen erhältlichen reaktiven Siliziumpartikel in eine flüssige, protische organische Ausgangsverbindung, insbesondere wasserfreie flüssige, protische, organische Ausgangsverbindung, eingeleitet werden. Vorzugsweise fungiert die flüssige, protische, organische Ausgangsverbindung der Funktionalisierung der Siliziumpartikel mit einer organischen Verbindung. Des Weiteren sind organofunktionelle Siliziumpartikel erhältlich, indem die in einem plasmachemischen Verfahren *insitu* erhältlichen reaktiven Siliziumpartikel in mindestens einen flüssigen Kohlenwasserstoff und/oder eine flüssige Mischung umfassend eine protische, organische Ausgangsverbindung und einen Kohlenwasserstoff eingeleitet werden. Als flüssige organische Ausgangsverbindungen gelten erfindungsgemäß organische Ausgangsverbindungen, die bei 1 bar und einer Temperatur kleiner gleich 100 °C als Gas oder Flüssigkeit vorliegen oder sich bei einem Druck von 10⁻⁵ bar bis kleiner 1 bar und einer Temperatur unter 100 °C unzersetzt in die flüssige Phase, bspw. in die Schmelze oder Gasphase, überführen lassen. Bevorzugte flüssige organische Ausgangsverbindungen umfassen organische Ausgangsverbindungen, die bei 1 bar und einer Temperatur kleiner 100 °C als Gas, Schmelze, Flüssigkeit, insbesondere in einer Lösung, Suspension, Emulsion, Dispersion vorliegen oder sich unzersetzt in die Gasphase überführen lassen oder in die flüssige Phase bei 1 bar und einer Temperatur kleiner 100 °C überführen lassen.

Ferner sind Gegenstand der Erfindung organofunktionelle Siliziumpartikel, die mit mindestens einer organischen Verbindung funktionalisiert sind, wobei die organische Verbindung, insbesondere -R, ausgewählt ist aus, Sauerstoff enthaltenden organischen Verbindungen, Stickstoff enthaltenden organischen Verbindungen, Schwefel enthaltenden organischen Verbindungen, Halogen enthaltenden organischen Verbindungen oder mindestens Sauerstoff, Stickstoff und/oder Schwefel enthaltenden organischen Verbindungen, insbesondere ist die organische Verbindung ausgewählt aus unsubstituierten Kohlenwasserstoffen, substituierten Kohlenwasserstoffen, Kohlenhydraten, Alkoholen, insbesondere -O-Rest, -O-Alkyl, Thiolen, insbesondere -S-Rest,
- S-Alkyl, Ethern, insbesondere -O-Etherrest, Aminosäuren, insbesondere -N-Rest, Polyethern, insbesondere -O-Poyetherrest, halogenierten Kohlenwasserstoffen, halogenierten Alkoholen, halogenierten Polyethern, Carbonsäure, insbesondere -OCO-Rest, Fettsäuren, insbesondere - OCO-Fettsäurerest, Fruchtsäuren oder den jeweiligen Resten, bevorzugt ist die organische Verbindung ausgewählt aus
- O-Kohlenwasserstoffen, reinen Kohlenwasserstoffen, teil- oder perhalogenierten Kohlenwasserstoffen, teil- oder perhalogenierten Polyethern oder deren jeweiligen Resten mit denen die Oberfläche der Siliziumpartikel funktionalisiert ist. Alkohole umfassen unsubstituierte Alkohole von Kohlenwasserstoffen sowie teil- und perhalogenierte Alkohole, wie HO-C₂F₅., HO-CₙHal₂ₙ₊₁ oder auch HO-C₂F₄-O-C₂F₄-C₂F₅, HO-CₙHal₂ₙ-O-CₙHal₂ₙ₊₁, mit Hal gleich Brom, Chlor, Fluor oder Jod, jeweils unabhängig mit n gleich 0 bis 20, insbesondere mit n gleich 1 bis 10.

Ferner sind Gegenstand der Erfindung organofunktionelle Siliziumpartikel, die mit mindestens einer organischen Verbindung funktionalisiert sind, wobei die mindestens eine organische Verbindung vorzugsweise eine monomere organische Verbindung ist.

Die an der Oberfläche organofunktionell modifizierten Siliziumpartikel weisen Si-R Komponenten auf, in denen das Si Atom stellvertretend für eine Vielzahl an Siliziumatomen in der Oberfläche der

Siliziumpartikel steht und -R für eine organische Verbindung die kovalent mit dem Siliziumatom verbunden ist.

Exemplarisch kann die Reaktion wie folgt dargestellt werden mit X-R als organische Ausgangsverbindung, X = Abgangsgruppen und R = organische Verbindung:

Si-Partikel-Si-H + X-R → Si-Partikel-Si-R + HX

Ein organofunktioneller Si-Partikel ist nachfolgend als Skizze dargestellt:

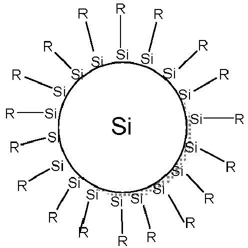

Ebenso Gegenstand der Erfindung sind organofunktionelle Siliziumpartikel, wobei die mindestens eine organische Verbindung, insbesondere R, ausgewählt ist aus -O-(C₁-C₄₈)-Alkyl, -O-(C₆-C₂₀)-Aryl, -O-(C₁-C₄₈)-Alkyl-(C₆-C₂₀)-Aryl, -O-(C₆-C₂₀)-Aryl-(C₁-C₄₈)-Alkyl, -(C₆-C₂₀)-Aryl, -O-(C₁-C₁₂)-Alkyl-O-(C₁-C₁₂)-Alkyl, -O-(C₁-C₁₂)-Alkyl-O-(C₆-C₂₀)-Aryl, -O-(C₆-C₂₀)-Aryl-O-(C₁-C₁₂)-Alkyl, -O-(C₆-C₂₀)-Aryl-O-(C₆-C₂₀)-Aryl, -OC=O-(C₁-C₁₂)-Alkyl, -S-Alkyl, -S-Aryl, -COO-(C₁-C₁₂)- Alkyl,-CONH-(C₁-C₁₂)-Alkyl, -CO-(C₁-C₁₂)-Alkyl, -CO-(C₆-C₂₀)-Aryl, -N[(C₁-C₁₂)-Alkyl]₂, -(C₁-C₄₈)-Alkyl, -(C₆-C₂₀)-Aryl, -(C₁-C₄₈)-Alkyl-(C₆-C₂₀)-Aryl, -(C₆-C₂₀)-Aryl-(C₁-C₄₈)-Alkyl, wobei die Alkyl- und Arylgruppen jeweils unabhängig unsubstituiert oder substituiert sein können, substituierte -(C₁-C₁₂)-Alkylgruppen und substituierte -(C₆-C₂₀)-Arylgruppen können in Abhängigkeit von ihrer Kettenlänge, einen oder mehrere Substituenten aufweisen; die Substituenten können unabhängig voneinander ausgewählt sein unter -(C₃-C₁₂)-Cycloalkyl, -(C₃-C₁₂)-Heterocycloalkyl, -(C₆-C₂₀)-Aryl, Fluor, Chlor, Brom, Cyano, Formyl, Acyl oder Alkoxycarbonyl. Die Alkyl-Gruppen können jeweils linear, verzweigt und/oder cyclisch sein.

Nach einer besonders bevorzugten Ausführungsform sind organofunktionelle Siliziumpartikel bevorzugt, bei denen die mindestens eine organische Verbindung ausgewählt ist aus -O-(C₁-C₄₈)-Alkyl, -O-(C₆-C₂₀)-Aryl, -O-(C₁-C₄₈)-Alkyl-(C₆-C₂₀)-Aryl, -O-(C₆-C₂₀)-Aryl-(C₁-C₄₈)-Alkyl, -(C₆-C₂₀)-Aryl, -O-(C₁-C₁₂)-Alkyl-O-(C₁-C₁₂)-Alkyl, -O-(C₁-C₁₂)-Alkyl-O-(C₆-C₂₀)-Aryl, -O-(C₆-C₂₀)-Aryl-O-(C₁-C₁₂)-Alkyl, -O-(C₆-C₂₀)-Aryl-O-(C₆-C₂₀)-Aryl, -(C₁-C₄₈)-Alkyl, -(C₆-C₂₀)-Aryl, -(C₁-C₄₈)-Alkyl-(C₆-C₂₀)-Aryl, -(C₆-C₂₀)-Aryl-(C₁-C₄₈)-Alkyl, wobei die Alkyl- und Arylgruppen jeweils unabhängig unsubstituiert oder teil- bis perhalogeniert sind, insbesondere ist das Halogen in teil- bis perhalogenierten Alkyl- und/oder Arylgruppen ausgewählt aus Fluor, Chlor oder Brom, vorzugweise aus Fluor und Chlor.

Besonders bevorzugt ist die mindestens eine organische Verbindung mit der die Siliziumpartikel funktionalisiert sind, ausgewählt aus -O-(C₁-C₄₈)-Alkyl, insbesondere ausgewählt aus -O-(C₁-C₁₂)-Alkyl, besonders bevorzugt ist die organische Verbindung ausgewählt aus -OCH₃, -OC₂H₅, -O-C₃H₇, -O-C₄H₉, -O-C₅H₁₁, -O-C₆H₁₃, -O-C₇H₁₅, -O-C₈H₁₇-O-C₉H₁₉, -O-C₁₀H₂₁, -O-C₁₁H₂₃, -O-C₁₂H₂₃, vorzugsweise -O-(iso-C₃H₇)-O-(n-C₃H₇), -O-C₄H₉, -O-(n-C₄H₉), -O-(iso-C₄H₉), -O-(tert-C₄H₉), -O-C₄H₉. Die Alkylketten können linear, verzweigt oder als Cyclus vorliegen.

Entsprechend einer weiteren bevorzugten Alternative kann die Oberfläche der Siliziumpartikel einen Bedeckungsgrad Θ mit der mindestens einen organischen Verbindung (chem. adsorbierte Moleküle N_{ads}) von 10 bis 100 in Bezug zu einer Monoschichtbedeckung (Nₘₒₙₒ) aufweisen, insbesondere beträgt der Bedeckungsgrad Θ 20 bis 100, vorzugsweise 25 bis 80. Der Bedeckungsgrad Θ ist das Verhältnis der Zahl der Moleküle, d.h. der Anzahl der Moleküle der organischen Verbindung, die chemisch adsorbiert sind N_{ads} zur Zahl der Moleküle bei vollständiger Bedeckung der Oberfläche ("Monoschichtbedeckung" Nmono): Θ = N_{ads}/Nₘₒₙₒ.

Ebenso ist Gegenstand der Erfindung ein Verfahren in dem vorzugsweise Monosilan ggf. auch ein Disilan, Trisilan, einer Gasentladung ausgesetzt wird und das gebildete feste Silizium mit einer Partikelgröße im Nanometerbereich, insbesondere von 1 bis 1000 nm, intermediär absorptiv abgefangen bzw. abgetrennt wird. Die Siliziumpartikel enthalten vorzugsweise größer gleich 90 bis 99,9999 Gew.-% Silizium, insbesondere 95 bis 99,99 Gew.-% Silizium, weiter bevorzugt von 98 bis 99,9999 Gew.-% Silizium.

Gleichfalls Gegenstand der Erfindung ist ein Verfahren zur Herstellung von organofunktionellen Siliziumpartikeln, sowie organofunktionellen Siliziumpartikeln erhältlich nach dem Verfahren, wobei die organofunktionellen Siliziumpartikel auf ihrer Oberfläche mit mindestens einer organischen Verbindung kovalent, funktionalisiert sind, indem
a) mindestens eine gasförmige oder bei erhöhter Temperatur gasförmige Siliziumverbindung,
b) in Gegenwart eines Verdünnungsgases in einer im Wesentlichen sauerstofffreien Atmosphäre im Plasma oder unter thermischen Bedingungen zersetzt wird, und
c) die gebildeten Siliziumpartikel unmittelbar in mindestens eine organische Ausgangsverbindung, insbesondere in eine fluide organische Ausgangsverbindung, vorzugsweise in eine fluide, wasserfreie, organische Ausgangsverbindung, oder in ein flüssiges Gemisch enthaltend die mindestens eine organische Ausgangsverbindung eingeleitet werden, und vorzugsweise die organofunktionelle Siliziumpartikel erhalten werden.

Nach einer bevorzugten Verfahrensvariante ist die organische Ausgangsverbindung, insbesondere X-R, mit x = H, ausgewählt aus HO-(C₁-C₄₈)-Alkyl, HO-(C₆-C₂₀)-Aryl, HO-(C₁-C₄₈)-Alkyl-(C₆-C₂₀)-Aryl, HO-(C₆-C₂₀)-Aryl-(C₁-C₄₈)-Alkyl, HO-(C₁-C₁₂)-Alkyl-O-(C₁-C₁₂)-Alkyl, HO-(C₁-C₁₂)-Alkyl-O-(C₆-C₂₀)-Aryl, HO-(C₆-C₂₀)-Aryl-O-(C₁-C₁₂)-Alkyl, HO-(C₆-C₂₀)-Aryl-O-(C₆-C₂₀)-Aryl, HOC=O-(C₁-C₁₂)-Alkyl, HS-Alkyl, HS-Aryl, H-COO-(C₁-C₁₂)-Alkyl, H-CONH-(C₁-C₁₂)-Alkyl, H-CO-(C₁-C₁₂)-Alkyl, H-CO-(C₆-C₂₀)-Aryl, H-N[(C₁-C₁₂)-Alkyl]₂, (C₁-C₄₈)-Alkyl, (C₆-C₂₀)-Aryl, (C₁-C₄₈)-Alkyl-(C₆-C₂₀)-Aryl, (C₆-C₂₀)-Aryl-(C₁-C₄₈)-Alkyl, wobei die Alkyl- und Arylgruppen jeweils unabhängig unsubstituiert oder substituiert sein können, substituierte -(C₁-C₁₂)-Alkylgruppen und substituierte-(C₆-C₂₀)-Arylgruppen können in Abhängigkeit von ihrer Kettenlänge, einen oder mehrere Substituenten aufweisen; die Substituenten können unabhängig voneinander ausgewählt sein unter -(C₃-C₁₂)-Cycloalkyl, -(C₃-C₁₂)-Heterocycloalkyl, -(C₆-C₂₀)-Aryl, Fluor, Brom, Chlor, Cyano, Formyl, Acyl oder Alkoxycarbonyl. HO-(C₁-C₄₈)-Alkyl und O-(C₁-C₄₈)-Alkyl können halogeniert sein.

Erfindungsgemäß ist es bevorzugt, wenn die *insitu* gebildeten Siliziumpartikel mit einer fluiden, wasserfreien, organischen Ausgangsverbindung oder einem fluiden Gemisch enthaltend die organische Ausgangsverbindung oder einem Gemisch enthaltend die fluide Ausgangsverbindung in Kontakt gebracht werden. Vorzugsweise werden die *insitu* gebildeten Siliziumpartikel in eine fluide, wasserfreie, organische Ausgangsverbindung oder ein fluides Gemisch enthaltend die organische Ausgangsverbindung oder ein Gemisch enthaltend die fluide Ausgangsverbindung eingeleitet.

Die Temperatur der organischen Ausgangverbindung im erfindungsgemäßen Verfahren beträgt vorzugsweise -273 °C bis 250°C, insbesondere bei einem Druck von 10⁻⁵ bar bis 100 bar_{abs.}, bevorzugt von -150 °C bis 150°C bei 0,001 bis 10 bar_{abs.}. Weiter bevorzugt beträgt die Temperatur -50 bis 100°C bei 0,001 bis 5 bar_{abs.}, vorzugsweise 0 bis 100°C bei 0,001 bis 5 bar_{abs.}.

Das Molverhältnis der gasförmigen Siliziumverbindung des Verdünnungsgases beträgt vorzugsweise von 0,1 Mol//100 Mol Verdünnungsgas bis 50 Mol/100 Mol Verdünnungsgas, vorzugsweise von 0,5 Mol//100 Mol Verdünnungsgas bis 2 Mol. Silicium/100 Mol Verdünnungsgas. Besonders bevorzugt werden 1,6 Vol.-% +/- 0,5
Vol.-% Silan im Verdünnungsgas verwendet. Der Druck beträgt vorzugsweise von 0,1 bis 2,5 bar_{abs.}., bevorzugt bei einer Temperatur von ca. 20-120 °C, 80-120 °C. Über das Molverhältnis Silizium zu Verdünnungsgas kann die Primärpartikelgröße und optional die Größe von Agglomeraten und/oder Aggregaten eingestellt werden.

Generell kann die Einleitung der Siliziumpartikel, insbesondere der *insitu* erhältlichen Siliziumpartikel, in die organische Ausgangsverbindung erfolgen, indem die Ausgangsverbindung eine Temperatur deutlich unterhalb 250 °C aufweist, vorzugsweise unter 200 °C, weiter bevorzugt unterhalb 100 °C, besonders bevorzugt unterhalb 50 °C bis -273 °C. Besonders bevorzugt weist die Ausgangsverbindung eine Temperatur von -10 bis 50 °C auf. Besonders bevorzugt erfolgt ein rasches Einleiten innerhalb einer Sekunde, vorzugsweise innerhalb von 1000 Millisekunden nach Verlassen des Plasmas und/oder der Zersetzung unter thermischen Bedingungen, besonders bevorzugt innerhalb von kleiner gleich 200 Millisekunden.

Die erfindungsgemäße gasförmige oder bei erhöhter Temperatur gasförmige Siliziumverbindung umfasst vorzugsweise Wasserstoff-enthaltende Silane. Bevorzugte Siliziumverbindungen umfassen Monosilan, Disilan, Trisilan und Gemische enthaltend mindestens eines der Silane oder auch eine Verbindung, die bei erhöhter Temperatur und/oder vermindertem Druck in die Gasphase übergehen. Als gasförmige Siliziumverbindung kommen generell alle Wasserstoff enthaltenden Silane, wie Monosilan, Disilan, Trisilan und Gemische enthaltend mindestens eines der Silane in Betracht und/oder Kohlenwasserstoff-enthaltende Silane sowie Halogen und Wasserstoff oder rein Halogen enthaltende Silane und Polysilane, die auch im Gemisch in dem Verfahren umgesetzt werden können. Vorzugsweise kann die Siliziumverbindung Spuren von Si-Cl, Si-Br und/oder Halogensilane aufweisen oder eine Si-Cl enthaltende Verbindung wird in Spuren zugesetzt. Die bei erhöhter Temperatur gasförmige Siliziumverbindung kann auch Kohlenwasserstoff-enthaltende Silane umfassen. Bevorzugte Silane sind Halogensilane, Chlorsilane, wie Dichlorsilan, Trichlorsilan, Tetrachlorsilan, Hexachlordisilan, Methyltrichlorsilan, Polyhalogensilane sowie reine H-Silane, wie Monosilan, Wasserstoff enthaltende Polysilane oder Polyhalogensilane und/oder mindestens ein Alkoxysilan. Reine H-Silane sind besonders bevorzugt.

Das erfindungsgemäße Verdünnungsgas oder ein Gemisch von Verdünnungsgasen umfasst vorzugsweise Argon, Helium, Xenon, Krypton, Wasserstoff oder ein Gemisch mindestens zwei der genannten Gase.

Bevorzugt ist das Plasma, ein nicht-thermisches Plasma, wobei das Plasma insbesondere eine Leistungsdichte von 0,1 bis 20 W/cm³ aufweist, bevorzugt von 10 bis 20 W/cm³, besonders bevorzugt von 15 bis 20 W/cm³.

Die Umsetzung unter thermischen Bedingungen, insbesondere umfassend die Zersetzung und Bildung der Partikel und der Cluster, kann bei Temperaturen ab 150 °C, bevorzugt ab 400 bis 1500 °C zur Herstellung amorpher Pulver erfolgen. Zur Herstellung amorpher Partikel werden kurze Kontaktzeiten, vorzugsweise bei Temperaturen unter 1300 °C, gewählt. Alternativ kann die Bildung amorpher Primärpartikel bei Temperaturen um
1300 °C bevorzugt kleiner gleich 1100 °C erfolgen. Die Abscheidung der Partikel erfolgt in einer kühleren Zone des Reaktors. Bevorzugte Kontaktzeiten liegen von 10 bis 600 Millisekunden.

Übliche konventionelle Verfahren, die auf einer Umsetzung von: SiCl₄ basieren benötigen 30 kW/kg und mehr für die Umsetzung. Die erfindungsgemäßen Verfahren beruhen vorzugsweise auf einer Umsetzung von Monosilan mit einem Energiebedarf von weniger als 10 kW/kg, besonders bevorzugt um 5 kWh/kg. Des Weiteren wird für die Umsetzung im (kalten) Plasma der Energiebedarf weiter reduziert auf kleiner 4 kW/kg.

Ein besonderer Vorteil des erfindungsgemäßen Verfahrens besteht darin, dass bei Verwendung von Monosilan oder Wasserstoffsilanen, wie SiₙH₂ₙ₊₂, zur Herstellung der Siliziumpartikel keine Säure bei der Herstellung der Siliziumpartikel gebildet wird, wie es bei der Herstellung von Siliziumpartikeln aus Halogensilanen der Fall ist.

Gleichfalls Gegenstand der Erfindung sind organofunktionelle Siliziumpartikel erhältlich nach dem erfindungsgemäßen Verfahren, indem die organofunktionellen Siliziumpartikel auf ihrer Oberfläche mit mindestens einer organischen Verbindung kovalent und/oder über Chemiesorption einer organischen Verbindung funktionalisiert sind.

Entsprechend einer weiteren Ausführungsform ist Gegenstand der Erfindung die Verwendung der organofunktionellen Siliziumpartikel oder der organofunktionellen Siliziumpartikel erhältlich nach dem erfindungsgemäßen Verfahren insbesondere als Additiv in einer Verwendung nach a), b) c), d) und/oder e). Ferner ist Gegenstand der Erfindung die Verwendung der organofunktionellen Siliziumpartikel oder der organofunktionellen Siliziumpartikel erhältlich nach dem erfindungsgemäßen Verfahren
a) als Additiv zur Verminderung der Viskosität von Fluiden, insbesondere von Flüssigkeiten, wie Schmierstoffen, bevorzugt von Ölen, die vorzugsweise als Lösungen, Emulsionen, Dispersionen, Suspensionen vorliegen können, oder als Additiv für Gase und/oder b) zum Schutz technischer Materialien vor elektromagnetischer Strahlung im Wellenlängenbereich von 10 bis 1500 nm, und/oder c) als UV-Schutz für technische Materialien, Oberflächen, Bauteile, elektrooptische Schichten, elektrooptischer Bauteile, und/oder d) als UV-Schutz vor elektronmagnetischer Strahlung, und/oder e) zum Schutz von biologischen Zellen vor elektromagnetischer Strahlung im Wellenlängenbereich von 10 bis 1500 nm.

Gleichfalls Gegenstand der Erfindung sind Zusammensetzungen umfassend mit organofunktionelle Siliziumpartikel die mit mindestens einer organischen Verbindung funktionalisiert sind als Additiv oder Hilfsstoff in mindestens einer Flüssigkeit, flüssigen Zusammensetzung, Paste oder pastösen Zusammensetzung, Emulsion, Dispersion, Suspension, Lösung, Gas oder Mischungen von Gasen.

Erfindungsgemäße Zusammensetzungen umfassen organofunktionelle Siliziumpartikel, die mit mindestens einer organischen Verbindung funktionalisiert sind, in Öl, Kohlenwasserstoffen, Fett, Wachs, Schmierstoff, Halogenkohlenwasserstoff, Monomere, wie (Meth)acrylat, Gasen. Besonders bevorzugte Zusammensetzungen umfassen Motoröle, Hydrauliköl, Teflon, Schmierstoffe, Paraffinöl, Kokosöl, Mineralöle, synthetische Motoröle, oder auch Silicondichtmassen oder auch Einbettmassen für elektronische Bauteile.

Bevorzugte reine Siliziumpartikel, insbesondere Primärpartikel, die vorzugsweise in Clustern vorliegen können, weisen einen Gehalt von Silizium von größer gleich 90 Gew.-% bis 100 Gew.-% in Bezug auf den Siliziumpartikel auf, insbesondere beträgt der Gehalt an Silizium größer gleich 55 Gew.-%, bevorzugt beträgt der Siliziumanteil größer gleich 80 Gew.-%, ≥ 95 Gew.-% , ≥ 98 Gew.-%, ≥ 99 Gew.-%, ≥ 99,5 Gew.-%,
≥ 99,99 Gew.-%, ≥ 99,999 Gew.-% bis 100,0 Gew.-%. Die Partikel sind vorzugsweise im Wesentlichen amorph. Der Gehalt an Sauerstoff liegt bei kleiner 50 Gew.-% bis 0,0
Gew.-%, bevorzugt bei kleiner 30 Gew.-%, besonders bevorzugt bei kleiner 10 Gew.-% bis 0,0 Gew.-%, und kann von der Primärpartikelgröße abhängig sein. Der Gehalt richtet sich erfindungsgemäß nach dem Oberflächen zu Volumenverhältnis.

Ebenso Gegenstand der Erfindung ist die Verwendung der organofunktionellen Siliziumpartikel zur Absorption von elektronmagnetischer Strahlung im Wellenlängen-bereich von größer gleich 10 nm bis 1100 nm, insbesondere im Wellenlängenbereich von 10 nm bis 450 nm. Bevorzugt werden die organofunktionellen Siliziumpartikel als UV-Schutz verwendet, vorzugsweise als UV-Schutz im Wellenlängenbereich von 180 bis 400 nm, besonders bevorzugt von 200 bis 380 oder bis 400 nm. Ebenso bevorzugt ist, dass die organofunktionellen Siliziumpartikel auch vor elektromagnetischer Strahlung im Wellenlängenbereich des extremen UV wie 10 bis 100 nm bzw. bis 120 nm, im fernen UV von 200 bis 280 nm, im mittleren UV von 280 bis 315 nm, und/oder im nahen UV von 315 bis 380 schützen können sowie je nach Partikelgröße der Primärpartikel von 400 bis 750 nm im Vis-Bereich. Ebenso können die Siliziumpartikel optional im IR-Bereich oberhalb von 750 nm bis ca. 1500 nm vor elektromagnetischer Strahlung schützen. Die definierte Absorption in den vorgenannten Bereichen kann spezifisch über den Gehalt der jeweiligen mittleren Primärpartikelgrößen gezielt eingestellt werden.

Bevorzugt sind weiterhin organofunktionelle Siliziumpartikel deren Primärpartikel einen mittleren Durchmesser d₅₀ (gemessen durch TEM-Auswertung; TEM = Transmissions-Elektronenmikroskop) im Bereich von 5 bis 80 nm aufweisen können, vorzugsweise von 20 bis 50 nm, insbesondere als *insitu* -Siliziumprimärpartikel, und die vorzugsweise als aneinandergewachsene Cluster vorliegen können. Die Cluster können auch als Agglomerate bezeichnet werden, wobei vorliegend unter einem Cluster aneinandergewachsene bzw. aneinander geschmolzene Primärpartikel verstanden werden. So können die Primärpartikel Cluster ausbilden, in denen mindestens zwei Primärpartikel an ihren Oberflächen aneinander geschmolzen sind. Diese Cluster können als lineare Ketten, in Form von Drähten oder auch verzweigt im 3-Dimensionalen Raum vorliegen.

Alternativ können die Siliziumpartikel, insbesondere als *insitu* Siliziumpartikel, erhalten werden in einem im nicht-thermischen Gleichgewicht befindlichen Plasma, dessen Temperaturen bei kleiner gleich 1050 °C, vorzugsweise kleiner gleich 700 °C, besonders bevorzugt bei kleiner gleich 150°C liegen. In einer anderen Variante ist die bevorzugte Prozessierung im Tieftemperaturbereich, d. h. im Bereich von 373°Kelvin und größer 0°Kelvin.

Erfindungsgemäß bevorzugt umfasst das Plasma die Bedingungen einer Gasentladung, insbesondere im nicht-thermischen Plasma.

Erfindungsgemäß eingesetzte nicht-thermische Plasmen werden beispielsweise durch eine Gasentladung oder durch Einstrahlung von elektromagnetischer Energie, wie durch Einstrahlung von Radio- oder Mikrowellen, in einer Reaktionskammer erzeugt. Die Erzeugung des Plasmas erfolgt also nicht wie bei thermischen Plasmen durch hohe Temperaturen, sondern durch nicht-thermische Ionisationsprozesse. Dem Fachmann sind solche Plasmen bekannt. Beispielhaft sei hierzu der sogenannte Penning-Ionisationsprozess genannt.

Für die vorstehend aufgeführten Verfahren wurden im nicht-thermischen Gleichgewicht betriebene Gasentladungen verwendet. Nicht-thermisch bedeutet im erfinderischen Sinne, dass die Elektronen als energievermittelnde Spezies eine höhere Temperatur und damit eine höhere Energie (Bewegungsenergie) als die Schwerteilchen (Si, SiH, SiH₂⁺ ... C, H, H₂, ...) aufweisen. Diese können durch dem Fachmann bekannte bzw. geläufige Vorschaltgeräte bzw. Netzteile erzeugt werden. Das nicht-thermische Plasma weist im Allgemeinen Elektronen mit einer Energie im Bereich von 0,1 bis 100 eV, insbesondere von 1 bis 50 eV, auf und Schwerteilchen mit einer Energie im Bereich von 0,000 001 bis 10 eV, insbesondere 0,01 bis 0,1 eV.

Überraschenderweise hat es sich gezeigt, dass eine solche nicht-thermische Gasentladung sich vorteilhaft durch Dimmen (Phasenanschnittsteuerung) und/oder über Pulsweitenmodulation bzw. über die Pulsfrequenz erzeugen lässt, wobei vorteilhafterweise die Elektroden als Hohlelektroden mit vorzugsweise porösen Stirnflächen bspw. aus Sintermetall durch eine zweidimensionale parabolische Form ausgeführt sind. Damit verteilt sich der 15 Gasstrom gleichmäßig über die Elektrodenoberfläche. Die zweidimensionale pilzartige Oberfläche kann gemäß F(r) = r2 (0,1< r < 1,1cm) beschrieben werden. Das erfindungsgemäße Verfahren wird im Allgemeinen in nicht-thermischen Plasmen durchgeführt, welche Temperaturen von 100 bis 3400 °C, vorzugsweise von 700 bis 999 °C aufweisen.

Das Plasma kann gepulst werden, vorzugsweise wird ein im Wesentlichen zylinderförmiges Plasma, insbesondere nicht-thermisches Plasma, in einem zylindrischen Bereich des Reaktionszylinders vorgesehen.

Bei den Synthesen im Plasma kann zweckmäßig mit einem Inertgas, beispielsweise einem Edelgas oder eine Mischung von Edelgasen, z. B. Argon mit geringen Anteilen an Helium, und/oder Krypton, Xenon, und/oder reaktiven Gasen wie Stickstoff, Wasserstoff, Methan, Tetrachlorkohlenstoff etc. gearbeitet werden. Andere Gasmischungen sind dem Fachmann bekannt oder können einschlägigen Lehrbüchern entnommen werden.

Eine weitere bevorzugte Ausführungsform des erfindungsgemäßen Verfahrens beinhaltet das Einleiten von Edelgas oder von Edelgasgemischen oder von Edelgas-Gasgemischen aus der Kombination Argon und/oder Helium, Krypton, Xenon als Verdünnungsgas und optional reaktiver Gase wie Stickstoff, Wasserstoff, Methan, Tetrachlorkohlenstoff etc. in das nicht-thermische Plasma, das insbesondere Temperaturen von kleiner gleich 3000 °C, vorzugsweise kleiner gleich 500 °C, besonders bevorzugt kleiner gleich 100 °C bis - 100 °C.

Eine weitere bevorzugte Ausführungsform des erfindungsgemäßen Verfahrens beinhaltet das Einleiten von Edelgas oder von Edelgasgemischen als Verdünnungsgas in das nicht-thermische Plasma, das insbesondere Temperaturen von kleiner gleich 1500 °C, vorzugsweise kleiner gleich 300 °C aufweist, besonders bevorzugt kleiner gleich 300 °C bis 100 °C.

Die Partikelgrößenbestimmung der Siliziumpartikel als auch die Bildung von Clustern, wie Agglomeraten oder das Vorliegen von Primärpartikeln kann analytisch mit nachfolgenden Methoden bestimmt werden. Die Bestimmung der Teilchengröße kann u.a. mittels Siebanalyse, TEM (Transelektronenmikroskopie), REM (Rasterkraftelektronen-mikroskopie) oder Lichtmikroskopie erfolgen.

### Ausführungsbeispiele

Die nachfolgenden Figuren stellen dar:

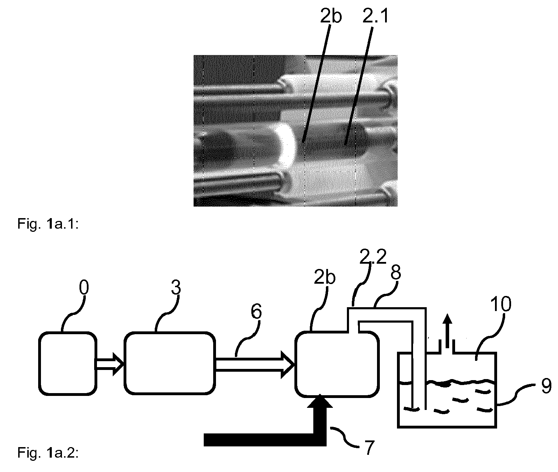

Fig. 1a.1: Plasmareaktor 2b,
Figur 1a.2: Plasmareaktor 2b mit Reaktor 9 enthaltend die fluide organische Verbindung
Fig. 1 b: Thermischer Reaktor mit Millikanäle
Fig. 2a: Messreihe Paraffinöl rein
Fig. 2b: Messreihe Paraffinöl mit 0,5% Si-Isopropanol

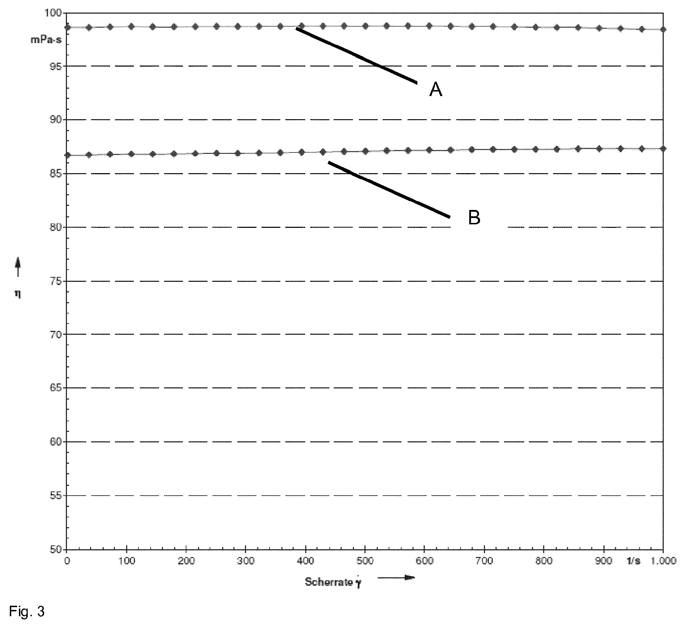

Fig. 3: Darstellung der dynamischen Viskosität in Abhängigkeit von der Scherrate (A: Paraffinöl ohne Additiv, B: Paraffinöl mit 0,5 Gew.-% funktionalisierten Siliziumpartikeln, je d = 0 mm)

### Ausführungsbeispiel 1: Plasma

5% Monosilan in Argon werden durch ein Plasma bei bevorzugt großer Schlagweite und kurzer Verweilzeit prozessiert und dabei einer Hochspannungs-Pulsentladung ausgesetzt. Das Prozessgas wird danach direkt durch die gewünschte Absorber Lösung z.B. Paraffinöl geblubbert und dabei die organofunktionalisierten Siliziumpartikel mit entsprechender Oberflächenspannung abgeschieden. Die gewonnene Suspension mit rund 0,5 Gew.-% Siliziumanteilen zeigt eine Viskositätsreduktion des Paraffinöls um ca. 15%.

### Ausführungsbeispiel 2: Plasma

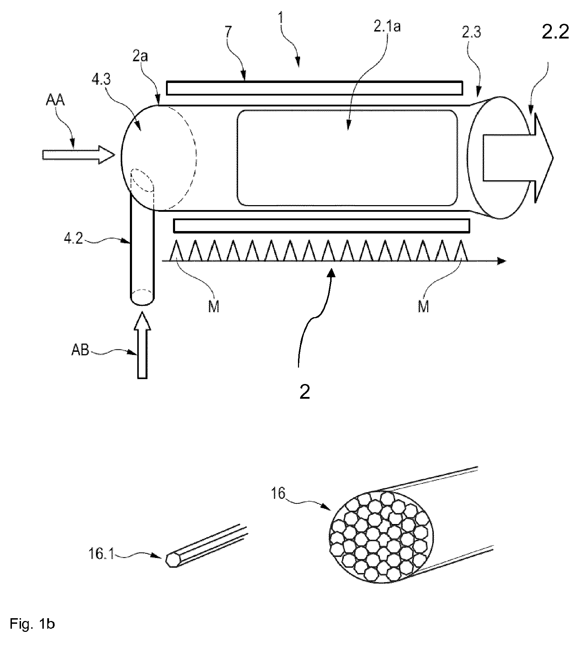

Völlig überraschend und unerwartet hat sich nun gezeigt, dass diese Aufgabe gelöst wird, indem ein Monosilan-Massenstrom bestehend aus 1,5% Monosilan in einer Argonmatrix, mittels eines im nicht-thermischen Gleichgewicht betriebenen Plasmas in einem Plasmareaktor 5 gemäß Figur 1 behandelt und zur Reaktion gebracht wird. Im erfinderischen Beispiel erfolgt die Reaktion kontinuierlich bei einem Gesamtvolumenstrom von 3 Normliter pro Minute Prozessgas (bei einer Konzentration von 1,65 Gew-% Monosilan in Argon). Das Prozessgas wird in einem Reaktorvolumen von Phi cm3 (3,14 cm3) bei einem Arbeitsdruck von 1,17 bar absolut zur Reaktion gebracht. Daraus ergibt sich eine Verweilzeit im Plasma von 0,073 Sekunden. Das aus der Dehydrierung von Monosilan hervorgehende Siliziumpartikel bildet sich durch Kondensation aus der Gasphase und ist an der Oberfläche hochreaktiv, weshalb es direkt in einen weiteren Reaktor eingeleitet wird, in dem es mit einem gewünschten Zielmolekül - hier Iso-Propanol - weiter reagieren kann. Die Primärpartikel haben typischerweise einen Durchmesser von 10 nm.

[Reaktordaten: Halbkugelelektrode mit geometrischen Radius R=1cm, Halbschalengegenelektrode mit geometrischen Innenradius Ri von 1,1 cm, Auslassbohrung zentral mit 3 mm Durchmesser, Abstand 5 mm, Elektrodenmaterial Graphit: Oberfläche der Halbschale (OH): OH=4*Phi*(R²)/2= 6,28 cm². Mit einem Elektrodenabstand von 5 mm ergibt sich das Plasma- bzw. Reaktorvolumen RV= OH*0,5 cm= 6,28cm^{2*}0,5 cm = 3,14 cm³ bzw. Phi cm³.]; [Verweilzeitberechnung: Volumenstrom Vm=3 Normliter pro Minute = 3000 cm³/min = 50 cm3/s; Arbeitsdruck Pa=1,17 bar absolut, damit Volumenstrom bei Arbeitsdruck zu Va=Vm/Pa= 50cm³/s/1,17 bar abs = 42,7 cm³/s. Die Verweilzeit VWZ= RV/Va= 3,14 cm³/42,7 cm³/s=0,073 s = 73 Millisekunden]

Druckerhöhung bewirkt damit eine Erhöhung der Verweilzeit im Plasma. Im dritten erfinderischen Beispiel wurde der Arbeitsdruck auf Pa=1,31 bar abs erhöht.

### Ausführungsbeispiel 3 - Plasma

1,6% Monosilan in Argon wird bei einem Volumenfluss von 3 Normliter pro Minute in der oben beschriebenen Entladungsanordung mit einem Plasmavolumen von rund 3,14 cm³ bei einem Druck Pa von 1,31 bar absolut durch ein nicht-thermisches Plasma zur Reaktion gebracht. Der Leistungseintrag (La), bestimmt durch dem Fachmann bekannter Meßeinrichtung (1 in Abbildung: Energiemeßgerät Brennenstuhl PM 231 E; Energiemeßgerät Brennenstuhl PM 231 E http://www.hornbach.de/data/shop/
D04/001/780/494/651/38/8906749_Doc_01_DE_20140728162218.pdf;) betrug La=55,5 Watt. Der Wert wurde ermittelt, indem die Leistungsaufnahme des Generators im Plasmabetrieb (157,7 Watt) von der Leistungsaufnahme im Leerlauf (102,2 Watt) subtrahiert wurde. Bei einem geometrischen Entladungsvolumen von VR=3,14 cm³ bestimmt sich die Leistungsdichte des Plasmareaktors mit La=55,5 Watt geteilt durch VR= 3,14 cm³ zu LD=17,67 Watt/cm³. Die Energiedichte für die Prozessierung bestimmt sich mit einem Volumenflow von 38,17 cm³/s bei Pa=1,31 Bar absolut zu La=55,5 Watt geteilt durch 38,17 cm³/s zu 1,45 Ws/cm³. Der Leistungseintrag erfolgte durch Hochspannungsinpulse mit einer Halbwertsbreite von T50=550ns mit einer Wiederholrate von 3700.

Der Produktstrom wird danach direkt durch die gewünschte Absorberlösung iso-Propanol geblubbert und dabei die organofunktionalisierten Siliziumpartikel entsprechender Obeflächenspannung abgeschieden. Das aus der Suspension durch Filtration gewonnene Material zeigt bei rund 0,5 Gew.-% Siliziumanteil eine Viskositätsreduktion bei Paraffinöl um ca. 15% (Tabelle im Anhang).

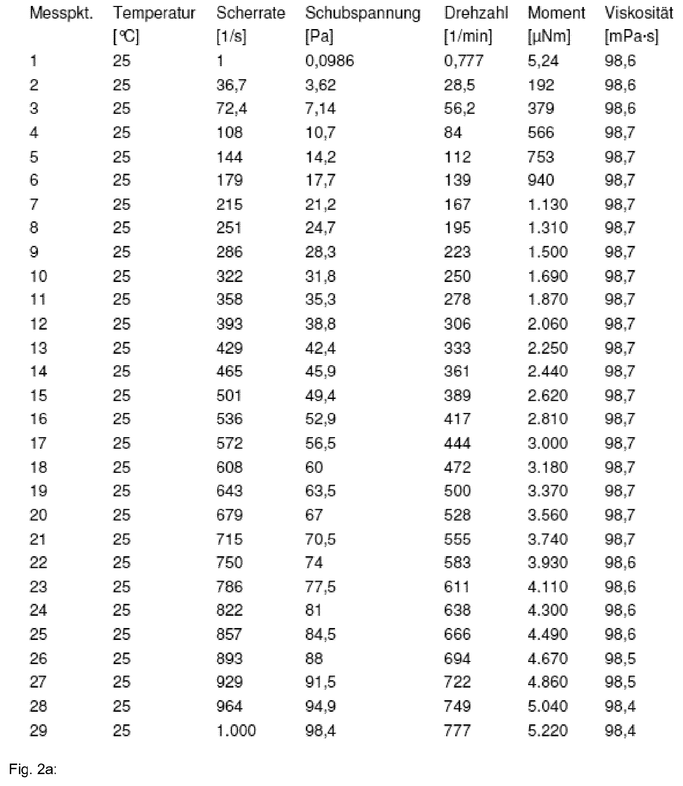

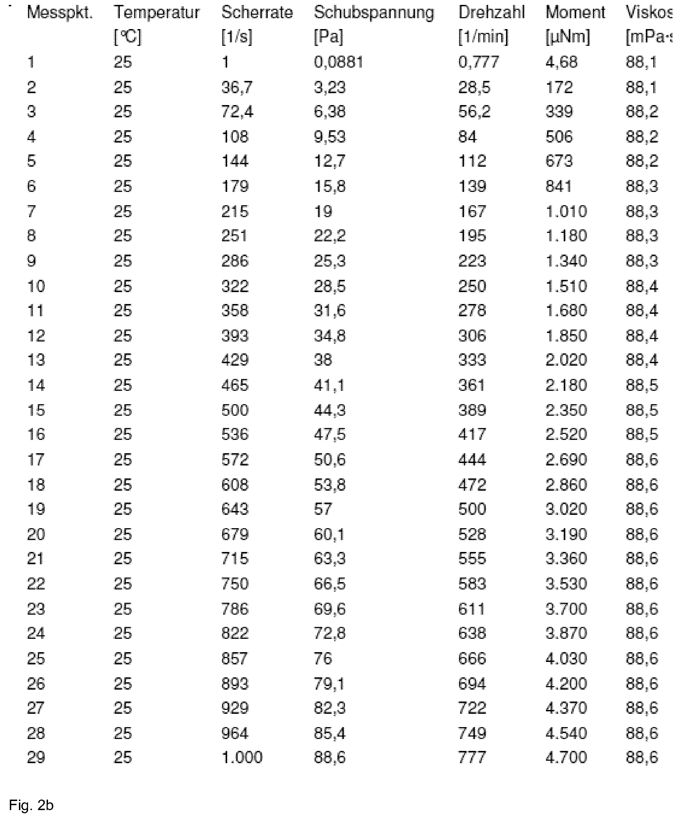

0,5 Gew.-% der mit iso-Propyloxy-Verbindungen funktionalisierten Siliziumpartikel vermindern in Paraffinöl die dynamische Viskosität [mPas·s]. Die Ergebnisse sind in den Figuren 2a ohne Additiv und in Figur 2b mit Additiv dargestellt. Durch die Zugabe einer geringen Menge von 0,5 Gew.-% der mit Propyloxy-Verbindungen funktionalisierten Siliziumpartikel konnte die Viskosität des Paraffins bei gleicher Scherrate und gleicher Drehzahl um ca. 15% vermindert werden.

### Bezugszeichenliste:

0 Messeinheit Leistungsaufnahme vom 220Volt Netz
1 Reaktor 1 (Freiraum-Infrarotstrahlungs- Reaktor, FSR)
2 Reaktionszylinder (horizontal oder vertikal)
2a horizontaler Reaktionszylinder
2b Plasmareaktor
2.1 Reaktionsraum; 2.1a: Reaktionszone, Reaktionszone 2.1a bis 2.1n
2.2 Reaktorzylinder Ausgang, insbesondere Reaktorrohr Ausgang
2.3 Reaktorzylinder Ausgang (mit Venturi-Trichter) Quenchzone
3 Plasmagenerator
4.2 Zuführung tangential, insbesondere für Zirkulargasströmung im Reaktor
4.3 Prozessgaszuführung mit Gasmischeinheit
6 Hochspannung- und Hochfrequenzverbindung zum Plasmareaktor
7 Edukt-Volumenstrom
8 Produktstrom mit Zielprodukt dehydriertem Siliziumpartikel
9 Reaktor zur Oberflächenfunktionalisierung (beinhaltet oberflächenfunktionalisiertes Siliziumpartikel)
10 Restgas bestehend aus Argon und Wasserstoff zur Aufarbeitung und Rückgewinnung 16 Reaktoreinsatz mit Milli-Kanälen z.B. SiC-Fritte
16.1 Millikanal Ausschnitt
M Messpunkte im Reaktor

AA, Prozessgas bzw. Prozessgasmischung, AB: Prozessgasmischung z.B. Monosilan-Argon-Gemisch, A: Paraffinöl ohne Additiv, B: Paraffinöl mit 0,5 Gew.-% funktionalisierten Siliziumpartikeln

## Patentansprüche

1. Organofunktionelle Siliziumpartikel
**dadurch gekennzeichnet, dass**
die Siliziumpartikel auf ihrer Oberfläche mit mindestens einer organischen Verbindung kovalent funktionalisiert sind.

2. Siliziumpartikel nach Anspruch 1, **dadurch gekennzeichnet,**
**dass** das jeweilige Molekulargewicht der organischen Verbindung kleiner 600 g/mol beträgt.

3. Siliziumpartikel nach Anspruch 1 oder 2,
**dadurch gekennzeichnet, dass**
die organofunktionellen Siliziumpartikel erhältlich sind, indem die in einem plasmachemischen Verfahren *insitu* erhältlichen reaktiven Siliziumpartikel in eine organische Ausgangsverbindung, insbesondere in eine flüssige, protische organische Ausgangsverbindung, mindestens einen flüssigen Kohlenwasserstoff und/oder eine flüssige Mischung umfassend eine protische, organische Ausgangsverbindung und einen Kohlenwasserstoff eingeleitet werden.

4. Siliziumpartikel nach einem der Ansprüche 1 oder 3,
**dadurch gekennzeichnet, dass**
die flüssige organische Ausgangsverbindung bei 1 bar und einer Temperatur kleiner gleich 100 °C als Gas oder Flüssigkeit vorliegt oder sich bei einem Druck von 10⁻⁵ bar bis kleiner 1 bar und einer Temperatur unter 100 °C unzersetzt in die flüssige Phase oder Gasphase überführen lässt.

5. Siliziumpartikel nach einem der Ansprüche 1 bis 3,
**dadurch gekennzeichnet, dass**
die flüssige organische Ausgangsverbindung ausgewählt ist aus einer monomeren organischen Verbindung, Sauerstoff enthaltenden organischen Verbindungen, Stickstoff enthaltenden organischen Verbindungen, Schwefel enthaltenden organischen Verbindungen, Halogen enthaltenden organischen Verbindungen oder mindestens Sauerstoff, Stickstoff und/oder Schwefel enthaltenden organischen Verbindungen, insbesondere ist die organische Verbindung ausgewählt aus unsubstituierten Kohlenwasserstoffen, substituierten Kohlenwasserstoffen, Kohlenhydraten, Alkoholen, Thiolen, Ethern, Aminosäuren, Polyethern, Carbonsäure, Fettsäuren, Fruchtsäuren, halogenierten Kohlenwasserstoffen, halogenierten Alkoholen, halogenierten Polyethern.

6. Siliziumpartikel nach einem der Ansprüche 1 bis 5,
**dadurch gekennzeichnet, dass**
die organische Verbindung ausgewählt ist aus -O-(C₁-C₄₈)-Alkyl, -O-(C₆-C₂₀)-Aryl, -O-(C₁-C₄₈)-Alkyl-(C₆-C₂₀)-Aryl, -O-(C₆-C₂₀)-Aryl-(C₁-C₄₈)-Alkyl, -(C₆-C₂₀)-Aryl, -O-(C₁-C₁₂)-Alkyl-O-(C₁-C₁₂)-Alkyl, -O-(C₁-C₁₂)-Alkyl-O-(C₆-C₂₀)-Aryl, -O-(C₆-C₂₀)-Aryl-O-(C₁-C₁₂)-Alkyl, -O-(C₆-C₂₀)-Aryl-O-(C₆-C₂₀)-Aryl, -OC=O-(C₁-C₁₂)-Alkyl, -S-Alkyl, -S-Aryl, -COO-(C₁-C₁₂)-Alkyl, -CONH-(C₁-C₁₂)-Alkyl, -CO-(C₁-C₁₂)-Alkyl, -CO-(C₆-C₂₀)-Aryl, -N[(C₁-C₁₂)-Alkyl]₂, -(C₁-C₄₈)-Alkyl, -(C₆-C₂₀)-Aryl, -(C₁-C₄₈)-Alkyl-(C₆-C₂₀)-Aryl, -(C₆-C₂₀)-Aryl-(C₁-C₄₈)-Alkyl, wobei die Alkyl- und Arylgruppen jeweils unabhängig unsubstituiert oder substituiert sein können, substituierte -(C₁-C₁₂)-Alkylgruppen und substituierte -(C₆-C₂₀)-Arylgruppen können in Abhängigkeit von ihrer Kettenlänge, einen oder mehrere Substituenten aufweisen; die Substituenten können unabhängig voneinander ausgewählt sein unter -(C₃-C₁₂)-Cycloalkyl, -(C₃-C₁₂)-Heterocycloalkyl, -(C₆-C₂₀)-Aryl, Fluor, Chlor, Cyano, Formyl, Acyl oder Alkoxycarbonyl.

7. Siliziumpartikel nach einem der Ansprüche 1 bis 6,
**dadurch gekennzeichnet, dass**
die organische Verbindung -O-(C₁-C₄₈)-Alkyl ausgewählt ist aus -O-(C₁-C₁₂)-Alkyl bevorzugt aus -OCH₃, -OC₂H₅, -O-C₃H₇, -O-C₄H₉, -O-C₅H₁₁, -O-C₆H₁₃, -O-C₇H₁₅, -O-C₈H₁₇ -O-C₉H₁₉, -O-C₁₀H₂₁, -O-C₁₁H₂₃, -O-C₁₂H₂₃, vorzugsweise -O-(iso-C₃H₇) -O-(n-C₃H₇), -O-C₄H₉, -O-(n-C₄H₉), -O-(iso-C₄H₉), -O-(tert-C4H9), -O-C₄H₉.

8. Siliziumpartikel nach einem der Ansprüche 1 bis 7,
**dadurch gekennzeichnet, dass**
die Oberfläche der Siliziumpartikel einen Bedeckungsgrad Θ von 10 bis 100 der mindestens eine organische Verbindung (chem. adsorbierte Moleküle N_{ads}) in Bezug zur einer Monoschichtbedeckung (Nₘₒₙₒ) aufweist, insbesondere beträgt der Bedeckungsgrad Θ 20 bis 100, vorzugsweise 25 bis 80.

9. Verfahren zur Herstellung von organofunktionellen Siliziumpartikeln, die auf ihrer Oberfläche mit mindestens einer organischen Verbindung kovalent, funktionalisiert sind, indem
a) mindestens eine gasförmige oder bei erhöhter Temperatur gasförmige Siliziumverbindung,
b) in Gegenwart eines Verdünnungsgases in einer im Wesentlichen sauerstofffreien Atmosphäre im Plasma oder unter thermischen Bedingungen zersetzt wird, und
c) die gebildeten Siliziumpartikel unmittelbar in mindestens eine fluide organische Ausgangsverbindung oder in ein Gemisch enthaltend die mindestens eine organische Ausgangsverbindung eingeleitet werden.

10. Verfahren nach Anspruch 9,
**dadurch gekennzeichnet, dass** die
organische Ausgangsverbindung ausgewählt ist aus HO-(C₁-C₄₈)-Alkyl, HO-(C₆-C₂₀)-Aryl, HO-(C₁-C₄₈)-Alkyl-(C₆-C₂₀)-Aryl, HO-(C₆-C₂₀)-Aryl-(C₁-C₄₈)-Alkyl, HO-(C₁-C₁₂)-Alkyl-O-(C₁-C₁₂)-Alkyl, HO-(C₁-C₁₂)-Alkyl-O-(C₆-C₂₀)-Aryl, HO-(C₆-C₂₀)-Aryl-O-(C₁-C₁₂)-Alkyl, HO-(C₆-C₂₀)-Aryl-O-(C₆-C₂₀)-Aryl, HOC=O-(C₁-C₁₂)-Alkyl, HS-Alkyl, HS-Aryl, H-COO-(C₁-C₁₂)-Alkyl, H-CONH-(C₁-C₁₂)-Alkyl, H-CO-(C₁-C₁₂)-Alkyl, H-CO-(C₆-C₂₀)-Aryl, H-N[(C₁-C₁₂)-Alkyl]₂, (C₁-C₄₈)-Alkyl, (C₆-C₂₀)-Aryl, (C₁-C₄₈)-Alkyl-(C₆-C₂₀)-Aryl, (C₆-C₂₀)-Aryl-(C₁-C₄₈)-Alkyl, wobei die Alkyl- und Arylgruppen jeweils unabhängig unsubstituiert oder substituiert sein können, substituierte -(C₁-C₁₂)-Alkylgruppen und substituierte -(C₆-C₂₀)-Arylgruppen können in Abhängigkeit von ihrer Kettenlänge, einen oder mehrere Substituenten aufweisen; die Substituenten können unabhängig voneinander ausgewählt sein unter -(C₃-C₁₂)-Cycloalkyl, -(C₃-C₁₂)-Heterocycloalkyl, -(C₆-C₂₀)-Aryl, Fluor, Chlor, Cyano, Formyl, Acyl oder Alkoxycarbonyl.

11. Verfahren nach Anspruch 9 oder 10,
**dadurch gekennzeichnet, dass** die
i) gasförmige oder bei erhöhter Temperatur gasförmige Siliziumverbindung umfasst Wasserstoff- und/oder Halogen-enthaltende Silane und/oder Kohlenwasserstoff-enthaltende Silane, Halogensilane, Chlorsilane, wie Dichlorsilan, Trichlorsilan, Tetrachlorsilan, Hexachlordisilan, Methyltrichlorsilan, Polyhalogensilane sowie reine H-Silane, wie Monosilan, Wasserstoff enthaltende Polysilane oder Polyhalogensilane und/oder mindestens ein Alkoxysilan, und/oder
ii) das Verdünnungsgas Argon, Helium, Xenon, Krypton, Wasserstoff oder ein Gemisch mindestens zwei der genannten Gase umfasst.

12. Verfahren nach einem der Ansprüche 9 bis 11,
**dadurch gekennzeichnet, dass** das Plasma ein nicht-thermisches Plasma ist, insbesondere weist das Plasma eine Leistungsdichte auf von 0,1 bis 20 W/cm³.

13. Siliziumpartikel erhältlich nach einem Verfahren nach einem der Ansprüche 9 bis 12, **dadurch gekennzeichnet, dass** die organofunktionellen Siliziumpartikel auf ihrer Oberfläche mit mindestens einer organischen Verbindung kovalent und/oder über Chemiesorption mit einer organischen Verbindung funktionalisiert sind.

14. Verwendung der organofunktionellen Siliziumpartikel nach Anspruch 1 oder organofunktionelle Siliziumpartikel erhältlich nach einem Verfahren nach einem der Ansprüche 9 bis 13,
a) als Additiv zur Verminderung der Viskosität von Fluiden, insbesondere von Flüssigkeiten oder Gasen, bevorzugt von Lösungen, Emulsionen, Dispersionen, Suspensionen,
b) zum Schutz technischer Materialien vor elektromagnetischer Strahlung im Wellenlängenbereich von 10 bis 1500 nm,
c) als UV-Schutz für technische Materialien, Oberflächen, Bauteile, elektrooptische Schichten, elektrooptischer Bauteile,
d) als UV-Schutz vor elektronmagnetischer Strahlung, und/oder
e) zum Schutz von biologischen Zellen vor elektromagnetischer Strahlung im Wellenlängenbereich von 10 bis 1500 nm.

15. Zusammensetzung umfassend organofunktionelle Siliziumpartikel nach Anspruch 1 oder organofunktionelle Siliziumpartikel erhältlich nach einem Verfahren nach einem der Ansprüche 9 bis 13, als Additiv oder Hilfsstoff in Flüssigkeiten, in flüssigen Zusammensetzungen, in Pasten oder pastösen Zusammensetzungen, in Emulsionen, Dispersionen, Suspensionen, Lösungen, Gasen.

## Geänderte Patentansprüche

### Geänderte Patentansprüche gemäss Regel 137(2) EPÜ.

1. Verwendung organofunktioneller Siliziumpartikel,
die auf ihrer Oberfläche mit mindestens einer organischen Verbindung kovalent funktionalisiert sind,
oder die dadurch erhältlich sind, dass
a) mindestens eine gasförmige oder bei erhöhter Temperatur gasförmige Siliziumverbindung,
b) in Gegenwart eines Verdünnungsgases in einer im Wesentlichen sauerstofffreien Atmosphäre im Plasma oder unter thermischen Bedingungen zersetzt wird, und
c) die gebildeten Siliziumpartikel unmittelbar in mindestens eine fluide organische Ausgangsverbindung oder in ein Gemisch enthaltend die mindestens eine organische Ausgangsverbindung eingeleitet werden,
A) als Additiv zur Verminderung der Viskosität von Fluiden, insbesondere von Flüssigkeiten oder Gasen, bevorzugt von Lösungen, Emulsionen, Dispersionen, Suspensionen,
B) zum Schutz technischer Materialien vor elektromagnetischer Strahlung im Wellenlängenbereich von 10 bis 1500 nm,
C) als UV-Schutz für technische Materialien, Oberflächen, Bauteile, elektrooptische Schichten, elektrooptischer Bauteile,
D) als UV-Schutz vor elektronmagnetischer Strahlung, und/oder
E) zum Schutz von biologischen Zellen vor elektromagnetischer Strahlung im Wellenlängenbereich von 10 bis 1500 nm.
